# EUROPÄISCHE PATENTANMELDUNG

(11) **EP 0 837 514 A1**
(43) Veröffentlichungstag der Anmeldung: **22.04.1998**
(21) Anmeldenummer: 97115697.1
(22) Anmeldetag: 10.09.1997
(51) Int. Cl.: H01M 2/02

(54) **Direkt bedrucktes galvanisches element**

(30) Priorität: 18.10.1996 DE 19643011
(71) Anmelder: VARTA Batterie Aktiengesellschaft, 30419 Hannover (DE)
(72) Erfinder: Schirr, Jürgen, Dr., 73479 Ellwangen (DE); Klaus, Christoph, 73479 Ellwangen (DE)
(74) Vertreter: Kaiser, Dieter Ralf, Dipl.-Ing.

(57) **Zusammenfassung**

Die Erfindung betrifft ein galvanisches Element mit einem äußeren metallischen Becher, welcher auf seiner Außenseite eine Isolations- und eine Dekorschicht besitzt, die mittels eines Druck- und/oder Beschichtungsverfahrens direkt auf den metallischen Becher aufgebracht ist.

## Beschreibung

Die Erfindung betrifft ein galvanisches Element mit einem äußeren metallischen Becher, welcher auf seiner Außenseite eine Isolations- und Dekorschicht besitzt.

Galvanische Elemente, welche hauptsächlich in elektrisch betriebenen Geräten eingesetzt werden, besitzen einen elektrisch isolierten Mantel und zwei Kontakte, die sich in der Regel gegenüberliegen. Über die Kontaktflächen wird der Stromkreis des elektrischen Gerätes geschlossen. Die zwischen den Kontaktflächen liegende Isolierung soll verhindern, daß die Zellen versehentlich entladen werden. So sind zum Beispiel viele elektrische Geräte mit einer Spiralfeder als elektrischer Kontaktfläche ausgerüstet, wobei die mantelförmige Isolierung die beiden Zellenpole vor einem Kurzschließen durch ein unbeabsichtigtes Verkanten dieser Spiralfeder schützt. Die isolierende Ummantelung der galvanischen Elemente schützt die Zellen weiterhin vor Umwelteinflüssen, die zu Kratzern, Flecken oder Korrosionsspuren auf dem Zellenbecher führen. Weiterhin ist die Isolationsummantelung der galvanischen Elemente mit Beschriftungen und Werbenachrichten versehen. Dieses Dekor enthält zum einen Informationen über das verwendete elektrochemische System, die Zellengröße, die Zellspannung, den Hersteller, das Ursprungsland und die Gewährleistungsfrist, es soll aber auch durch seine Gestaltung eine entsprechende Werbebotschaft vermitteln.

Aus den Dokumenten DE 1671802 und DE 2845242 sind metallische Umhüllungen für galvanische Elemente bekannt, die auf ihrer Außenseite eine Dekorschicht aufweisen. Diese metallischen Umhüllungen werden vorrangig für galvanische Elemente des Leclanché-Typs eingesetzt, um das Austreten von Elektrolyt nach der vollständigen Entladung der Zellen zu verhindern. Bei galvanischen Elementen vom Leclanché-Typ kann es gegen Ende der Entladung der Zellen zu Lochbildungen in der als Becher ausgebildeten Zinkanode kommen. Als Auslaufschutz werden die Zellen der vorgenannten Art unter Zwischenlage einer Isolationsschicht mit einem metallischen Mantel versehen, der mit einer Dekorschicht versehen wird. Die vorbeschriebene Ummantelungstechnik wird auch bei galvanischen Zellen vom Alkali-Mangan-Typ angewendet. Um die Kapazität der Zellen zu erhöhen, werden seit einiger Zeit die aus den Dokumenten US 4,869,978, WO/19835 und US 4,801,514 bekannten Folien- oder Klebeetiketten zur elektrischen Isolation und als Dekor eingesetzt, weil dadurch die Dicke der Ummantelung verringert werden kann. Bei gleichbleibenden Abmaßen des galvanischen Elements kann man dadurch ein größeres Zellengefäß verwenden und somit mehr aktive Masse in die Zellen einbringen. Die bekannten Verfahren zur elektrisch isolierenden Ummantelung galvanischer Elemente stellen einen erheblichen Kostenfaktor dar, weiterhin sind die Batteriehersteller an einer Verringerung der Stärke der Isolationsschicht interessiert.

Die Erfindung hat sich die Aufgabe gestellt, galvanische Elemente und Verfahren zu deren Herstellung anzugeben, die auf die bekannten, kostenaufwendigen Verfahren zur Ummantelung der galvanischen Zellen verzichten.

Die Aufgabe wird erfindungsgemäß durch ein galvanisches Element mit einem äußeren metallischen Becher gelöst, bei dem die Isolations- und Dekorschicht mittels eines Druck- und /oder Beschichtungsverfahrens direkt auf den metallischen Becher aufgebracht ist.

Vorteilhafterweise werden die galvanischen Elemente dadurch hergestellt, daß die Isolations- und Dekorschicht vor der Formung des metallischen Bechers aufgebracht wird. In weiterer Ausgestaltung der Erfindung werden die galvanischen Elemente dadurch hergestellt, daß mindestens die Isolationsschicht auf den vorgefertigten metallischen Becher aufgebracht wird. Eine weitere Ausgestaltung der Erfindung besteht darin, daß die Isolations- und Dekorschicht auf den metallischen Becher des komplettierten galvanischen Elements aufgebracht wird, d.h. auf galvanische Zellen, die mit aktiven Materialien gefüllt und verschlossen sind. Die Herstellung der galvanischen Elemente erfolgt dabei in der Weise, daß die Isolationsschicht durch elektrophoretische Beschichtung, Sprühbeschichtung, Pulverbeschichtung, Rakel- oder Tauchverfahren und die Dekorschicht durch Druckverfahren wie Zerrdruck, Flachbettsiebdruck, Rotationssiebdruck, Offsetdruck oder Tampondruck aufgebracht wird. Bevorzugt werden in UV-Licht härtende Lacke verwendet. Der Einsatz solcher Lacke ermöglicht hohe Fertigungstaktzahlen und verringert die Gefahr einer Schädigung der Zellen, da keine Wärmebehandlung der Zellen zur rationellen Aushärtung der Lackschicht erforderlich ist. Die erfindungsgemäßen galvanischen Elemente und die Verfahren zu ihrer Herstellung weisen folgende Vorteile auf:
1. Eine kontinuierliche und mit hoher Geschwindigkeit durchführbare Produktion
2. Materialkostenersparnis durch Eliminierung des Kunststoffolienetiketts
3. Vereinfachung der Herstellungsschritte durch eine niedrigere Fertigungstiefe, da die Vorfertigung des bedruckten Folienbandes, Schneid- und Aufbringungsschritte sowie Transport und Lagerung entfallen.
4. Realisierung einer höheren Zellenkapazität, da die Becherlackierung dünner als ein Folienetikett ist und hierdurch ein größerer Zellenbecher mit mehr verfügbaren Raum für elektrochemisch aktives Material genutzt werden kann
5. Große Flexibilität bei der Wahl des Zellendesigns

Die Erfindung wird an nachfolgenden Beispielen dargestellt:

### Beispiel 1

Komplettierte Zellen wurden im Flachbettsiebdruck durch direktes Bedrucken des rotierenden metallischen Bechers in einem Schritt mit der Isolations- und Dekorschicht versehen. Das Bedrucken wurde mit einer sehr hochviskos eingestellten konventionellen Druckfarbe auf Basis von Polyacrylaten oder Polyurethanen vorgenommen. Die Trocknung erfolgte durch einen Warmluftstrom bei ca. 60 °C. Bei einer Schichtdicke der trockenen Druckfarbe von 10 bis 20 µm wurde ein ausreichender Isolationswiderstand erzielt.

### Beispiel 2

Komplettierte Zellen wurden zur Basislackierung mit Epoxidharz, Polyurethanharz oder einem Polyacrylat als Isolationsschicht sprühbeschichtet. Die vorbeschichteten Zellenbecher wurden dann gemäß Beispiel 1 im Flachbettdruck mit der Dekorschicht versehen. Als Druckfarbe wurde ein in UV-Licht härtender Lack eingesetzt, der im Sekundenbereich aushärtet. Die Beschichtung erreicht einen Klebeetiketten vergleichbaren Isolationswiderstand.

### Beispiel 3

Die metallischen Bechergefäße wurden vor dem Komplettieren der Zellen gemäß Beispiel 2 mit einer als Isolationsschicht dienenden Basislackierung versehen. Die Dekorschicht wurde auf diese vorbeschichteten Zellen durch Rotations-Offsetdruck mit konventionellen Druckfarben aufgebracht. Bei einer Schichtdicke von ca. 20 µm wurde ein den Praxisanforderungen genügender Isolationswiderstand erzielt.

### Beispiel 4

Eine Sprühlackierung eines Zellbechers wird mit einem elastischen, abrasionsfesten Grundlack vorgenommen. Anschließend erfolgt ein thermisches Einbrennen bei 180°C. Die erhaltenen Becher werden zur Zellherstellung wie unlackierte Becher-Schüttware eingesetzt. Die Einbrennlackierung und die Elastizität der Lackschicht verhindert ein Abplatzen des Lackes in der Bördelzone beim Bördel. Eine anschließende Aufbringung des Dekors durch Offsetdruck wird mit einem UV-härtenden Lacksystems (Schichtdicke typisch 1 bis 5µm) vorgenommen. Abschließend kann noch eine Klarlack-Übertackierung (Schichtdicke typisch 10 bis 30µm) erfolgen. Der Einsatz eines UV-Lackes hat den Vorteil, daß die Zelle zum Aushärten nicht thermisch belastet werden muß.

### Beispiel 5

Eine UV-härtender Grundlack (z.B. 20µm) wird auf die fertige Zelle durch Walzenbedruckung aufgebracht. Anschließend erfolgt das Aufbringen der Dekorschicht (üblich 2-10µm) durch Offsetdruck, wobei bis zu sieben Farben in einem Arbeitsgang üblich und möglich sind. Eine Überlackierungsschicht wird zum zusätzlichen mechanischen Schutz und zur Erhöhung des Glanzes in Form eines ebenfalls UV-härtendes System zum Schluß aufgebracht.

### Beispiel 6

Eine 2-Komponenten-Lacksystems wird durch Sprühbeschichtung auf die fertige Zelle aufgebracht. Die anschließende Dekorbildung erfolgt durch Offsetdruck mit UV-härtendem Lack. Eine zusätzliche Walzenbeschichtung wird mit einem UV-härtenden Klarlack vorgenommen, wobei dieser Klarlack UV-absobierende oder fluorezierende Bestandteile enthält. Vorteilhaft dabei ist, daß eine so bedruckte Zelle durch Scannersystem erkannt und sortiert werden kann.

## Patentansprüche

1. Galvanisches Element mit einem äußeren metallischen Becher, welcher auf der Außenseite eine Isolations- und eine Dekorschicht besitzt, dadurch gekennzeichnet, daß die Isolations- und Dekorschicht mittels eines Druck- und/oder Beschichtungsverfahrens direkt auf den metallischen Becher aufgebracht ist.

2. Verfahren zur Herstellung eines Elements gemäß Anspruch 1, dadurch gekennzeichnet, daß die Isolations- und Dekorschicht vor der Formung des metallischen Bechers auf das metallische Material aufgebracht wird.

3. Verfahren zur Herstellung eines Elements gemäß Anspruch 1, dadurch gekennzeichnet, daß mindestens die Isolationsschicht auf den vorgefertigten metallischen Becher aufgebracht wird.

4. Verfahren zur Herstellung eines Elements gemäß Anspruch 1, dadurch gekennzeichnet, daß die Isolations- und Dekorschicht auf den metallischen Becher des komplettierten galvanischen Elements aufgebracht wird.

5. Verfahren nach einem der Ansprüche 2 bis 4, dadurch gekennzeichnet, daß die Isolationsschicht durch elektrophoretische Beschichtung, Sprühbeschichtung, Pulverbeschichtung, Rakel- oder Tauchverfahren und die Dekorschicht durch Druckverfahren wie Zerrdruck, Flachbettsiebdruck, Rotationssiebdruck, Offsetdruck oder Tampondruck aufgebracht wird.

6. Galvanisches Element nach Anspruch 1, dadurch gekennzeichnet, daß die Isolationsschicht und die Dekorschicht ein UV-Licht härtender Lack ist.
